# EUROPÄISCHE PATENTSCHRIFT

(11) **EP 0 690 034 B1**
(45) Veröffentlichungstag und Bekanntmachung des Hinweises auf die Patenterteilung: **29.12.1997**
(21) Anmeldenummer: 94110189.1
(22) Anmeldetag: 30.06.1994
(51) Int. Cl.: C04B 22/04, C04B 103/42

(54) **Gasporenbildner für die Porenbildung von Frischbeton sowie Verfahren zu seiner Anwendung für die Herstellung einer Zellenbetonmischung**
Gas-pore generating agent for pore-forming in unset concrete and method for its use in the preparation of a cellular concrete mixture
Agent générateur de pores de gaz pour la formation de pores dans le béton frais et méthode pour son utilisation dans la préparation d'un mélange de béton-gaz

(43) Veröffentlichungstag der Anmeldung: 03.01.1996
(73) Patentinhaber: Wagina, Ludmila Philippovna, Moskau (RU); Beliaikine, Grigori, D-10719 Berlin (DE)
(72) Erfinder: Wagina, Ljudmila Filippovna, Moskau (RU); Gromovoj, Sergej Afanasevich, dom 21 Moskowskaja Oblast (RU); Poljakov, Sergej Vitalevich, Irkutskaja Oblast (RU); Spakovskij, Anatolij Semjonovich, Irkutskaja Oblast (RU)
(74) Vertreter: Ludewig, Karlheinrich, Dipl.-Ing.

(56) Entgegenhaltungen:
- CHEMICAL ABSTRACTS, vol. 110, no. 14, 3. April 1989, Columbus, Ohio, US; abstract no. 120224n, H. NAKAUCHI ET AL. Seite 355 ;
- CHEMICAL ABSTRACTS, vol. 88, no. 16, 17. April 1978, Columbus, Ohio, US; abstract no. 109612u, S. ISHIJIMA ET AL. Seite 273 ;
- CHEMICAL ABSTRACTS, vol. 81, no. 22, 2. Dezember 1974, Columbus, Ohio, US; abstract no. 140204s, S. LEVIN ET AL. Seite 249 ;
- DATABASE WPI Section Ch, Week 8545, Derwent Publications Ltd., London, GB; Class E19, AN 85-280505 & JP-A-60 191 071 (SUMITOMO METAL MINI KK) 28. September 1985

## Beschreibung

Die Erfindung bezieht sich auf das Gebiet der Baumaterialienindustrie und betrifft die Zusammensetzung eines Gasporenbildners, der Aluminiumpulver sowie einen organischen Zusatz enthält und zur Herstellung von Zellenbeton verwendet wird.

Zellen- oder Porenbeton ist eine Art des Leichtbetons, wobei man wiederum zwischen Gasbeton und Schaumbeton unterscheidet. Beide werden aus sehr feinkörnigen mineralischen Komponenten hergestellt und sind durch das Vorhandensein einer bedeutenden Menge künstlich erzeugter und bedingungsweise geschlossener Poren in Form von luft- oder gasgefüllten Zellen gekennzeichnet. Die feinen Zellen, in der Regel mit mittleren Durchmessern von 0,2 bis 1,5 mm, sollen gleichmäßig im Betonkörper verteilt und durch dünne und feste Zwischenwände getrennt sein, die die tragende räumliche Matrix des Werkstoffes bilden.

Zellenbeton zeichnet sich durch ein kostengünstiges Herstellungsverfahren und eine hohe Verfügbarkeit der zu seiner Produktion notwendigen Rohstoffe aus und weist gute Wärmeisolations- und Konstruktionseigenschaften auf. Die Bereitung der Zellenbetonmischung aus einem Binder, beispielsweise Branntkalk, Portlandzement und/oder Hüttenzement, einer mineralischen Zuschlagkomponente, wie gebrochene Natursteine, Quarz-oder keramischen Sande, Schiefermehl und/oder Flugasche, sowie Wasser wird in Mischern vorgenommen, bis eine homogene Masse erhalten wird. Dabei kommen der Reihenfolge der Zugabe der Mischungskomponenten, ihrer Auswahl und Menge eine große Bedeutung zu.

Eine wichtige technologische Größe ist der Wasser-Zement-Wert (w/z), der die Verarbeitbarkeit des Frischbetons und die Eigenschaften des Festbetons, wie z.B. seine Porigkeit, Dichtheit, Druckfestigkeit, bestimmt. Beim Mischungsvorgang sind die inneren Reibungskräfte, die Verbindungskräfte zwischen den Teilchen, der Schubwiderstand der Mischung und ebenso die Schwerkräfte zu überwinden. Daher lassen sich bewegliche Mischungen, mit einem erhöhten Wassergehalt bedeutend leichter in den homogenem Zustand durchmischen. Jedoch führt ein Überschuß an Wasser in der Betonmischung seinerseits zu einer Verschlechterung der Qualität des Festbetons: Festigkeitsverlust, Erhöhung des Zementverbrauches, Verringerung der Frostbeständigkeit sind die Folge.

Die Frischbetonmischung beginnt nach der Zugabe des Anmachwassers unter Bildung von Calciumhydroxid zu hydratisieren. Dieses weist noch keine Festigkeit auf. Nach einiger Zeit setzt die Bildung von Calciumsilicathydraten (CSH-Phasen) ein, die für die Festigkeitsentstehung des Betons ausschlaggebend sind. Den Anstieg der Festigkeit der Betonmischung nennt man den Erstarrungsbeginn der Mischung. Nach DIN 1164 darf dieser frühestens nach einer Stunde eintreten. Das Erstarrungsende muß nach zwölf Stunden erreicht sein. Am Erstarrungsende sind etwa 15 % des Zementes hydratisiert und es beginnt die Erhärtung, die zur Festbetonbildung führt und durch ein Fortschreiten des Hydratationsvorganges in das Korn-innere des Binders sowie das Hineinwachsen der CSH-Phasen in noch vorhandene Poren gekennzeichnet ist. Das Erreichen der Endfestigkeit des Festbetons kann bis zu einigen Jahren dauern, nach 28 Tagen ist aber in der Regel eine ausreichende Festigkeit vorhanden und bei vielen Betonarten kaum noch mit einem merklichen Festigkeitsanstieg zu rechnen. Deshalb gilt i.a. die Festigkeit des Betons nach 28 Tagen als Kriterium für seine Güte.

Zur Bereitung von Gasbeton werden der zähflüssigen Betonmasse vorzugsweise Aluminiumpulver, aber auch Calciumcarbidpulver oder Chlorkalk und Wasserstoffperoxid zugemengt. Das durch die im Verlauf der einsetzenden chemischen Reaktion entstehende Gas (Wasserstoff, Ethin oder Sauerstoff) bläht den Frischbeton auf und bildet die Zellen. Dabei muß die Erstarrungszeit des Binders mit der Gasbildung in Einklang gebracht werden, da sonst die Masse wieder zusammenfällt und nicht die gewünschte homogene Porositat entsteht. Die aktive Gasentwicklung sollte nach etwa 5 bis 10 Minuten einsetzen. Die Zusammensetzung der Mischung sollte so gewählt werden, daß diese während der Zeit der Gasbildung eine ausreichende Beweglichkeit aufweist, gleichzeitig aber auch über die nötige Plastizität verfügt, um dem Bestreben der sich bildenden Gasblasen entgegenzuwirken, die einzelnen Zellen aufzusprengen und Querwege zum Entweichen des Gases in die Umgebung zu bilden.

Das herkömmlicherweise als Gasbildner eingesetzte Aluminiumpulver besitzt eine Reihe von Nachteilen: Polydispersität, Hydrophobie, Explosibilität. Eine polydisperse Zusammensetzung des Aluminiumpulvers verschlechtert die Struktur des Zellenbetons und ruft einen übermäßig hohen Verbrauch an Gasbildner hervor, da sehr kleine Teilchen des Pulvers schon im Prozeß der Mischungszubereitung mit dem Calciumhydroxid fast vollständig interagieren, während die größeren Teilchen erst nach dem Abbinden der Mischung während des Erstarrungsprozesses Wasserstoff freisetzen und dadurch die Werkstoffstruktur zerstört werden kann (vgl.: Vagina, L. F.: Aljuminievye gazoobrazovateli (Aluminiumgasbildner), Autorreferat der Dissertation, Moskau, 1971).

Zum Beseitigen der Hydrophobie und Explosibilität wurde in die Produktion des Zellenbetons der zusätzliche Verfahrensschritt der Behandlung der Pulver mit wäßrigen Lösungen oberflächenaktiver Stoffe eingeführt. Eine große Menge von Publikationen bezieht sich auf wäßrige Suspensionen von Gasbildnern auf der Grundlage von Aluminiumpulver, das zusätzlich beispielsweise Glyzerin (UdSSR-Urheberschein 323 388), Molke (UdSSR-Urheberschein 421 658), ein Natriumsalz höherer Fett- und Alkylnaphtensäuren (UdSSR- Urheberschein 652 139), Alkylbenzolsulfonat und Alkylphenol (UdSSR-Urheberschein 833 746), Alkylbenzolsulfonat mit Stärke oder Gelatine (UdSSR-Urheberschein 998 413) enthalten kann. Die auf diese Weise erhaltenen wäßrigen Aluminiumsuspensionen zeigen aber nach 6-18 Stunden eine zunehmende Verringerung ihrer Reaktionsfähigkeit.

Um die Reaktionsfähigkeit des Gasbildners zu erhöhen, Wasser als Bestandteil seiner Zusammensetzung auszuschließen, dem Gasbildner hydrophile Eigenschaften zu verleihen und seine Explosibilität zu beseitigen, wurden auch Zusammensetzungen aus Aluminiumpulver mit synthetischen Fettsäuren (UdSSR-Urheberschein 376 337), Aluminiumpulver und Kolophoniumschmelze (UdSSR-Urheberschein 300 439) u.a. vorgeschlagen. Der Ausschluß von Wasser aus den Zusammensetzungen der Gasbildner erlaubte es. mehrere der o.g. Nachteile zu beseitigen, aber beim Einsatz dieser Porenbildner zur Herstellung der Zellenbetonmischung mußte heißes Anmachwasser verwendet werden. Es gelang nicht, die Hydrophobie vollständig zu beseitigen und eine feinporige Struktur des Zellenbetons zu erhalten, was sich negativ auf die Qualitat der daraus hergestellten Erzeugnisse auswirkte. Diese Verfahren zur Herstellung von Zellenbeton sind zudem durch einen hohen Verbrauch an Aluminiumpulver gekennzeichnet.

Bei der Herstellung von Schaumbeton werden der Frischbetonmasse in der Regel schaumbildende, meist organische, seifen- oder harzartige, grenzflächenaktive Stoffe beigemischt, die die Oberflächenspannung herabsetzen und dadurch die Rolle von Hydrophilisatoren spielen. Beim Durchmischen des Frischbetons fördern sie den Lufteintrag in die Masse, so daß durch die verstärkte Schaumbildung die Entstehung von Luftporen und die Ausbildung einer Micellenstruktur im Beton begünstigt werden (vgl.: Gerschberg, O. A.: Tekhnologija betonykh i zhelezobetonykh izdelij (Technologie der Beton- und Eisenbetonerzeugnisse), Moskau, 1971). Diese oberflächenaktiven Stoffe sollen gleichzeitig mehrere Funktionen erfüllen: verbesserung der Strukturausbildung im Beton, Erhöhung der Plastizität der Mischung und Verbesserung der Porenbildung. Zu diesem Zweck wurden verschiedene oberflächenaktive Zusätze vorgeschlagen, z.B. Karbonsauren (UdSSR-Urheberschein 355 013), Seife (UdSSR-Urheberschein 560 855), Alkyl-Laurylsulfonat, das zusätzlich sekundäres Natriumphosphat enthält (UdSSR-Urheberschein 477 722) u.a..

Zur Erzielung eines feinzelligen Aufbaus soll die Masse eine ausreichende Elastizität aufweisen und keiner Entmischung unterworfen sein. Daher können die Zusätze gegebenenfalls des weiteren oft auch verschiedene Stabilisatoren enthalten. Die Teilchen der Betonmasse verteilen sich dann gleichmäßig über die Oberfläche der Luftblasen und füllen als stabile Zwischenwände den freien Raum zwischen ihnen aus. Bei der Vervendung der bekannten lufteintragenden Zusätze zur Porenbildung gelingt es aber bisher auf diese Weise nicht, die notwendige geringe Betondichte zu erreichen. Der Frischbeton erfordert einen hohen Energieaufwand für das Durchmischen und daher eine entsprechende hocheffiziente Ausrüstung. Darüber hinaus gewährleisten die verwendeten bekannten Zusätze nicht die erforderliche hohe Plastizität des Frischbetons, es entsteht keine ausreichend feinporige Betonstruktur.

Dem technischen Wesen und dem erzielten Ergebnis nach kommt ein Gasbildner zur Porenbildung in Zellenbeton nach dem UdSSR-Urheberschein 678 861 der Erfindung am nächsten. dieser enthält folgende Komponenten (in Masseprozent):
- Aluminiumpulver 50,0 - 83,0
- Triethanolamin 6,5 - 40,0
- Fettsäuren Rest.
Dieser Gasbildner ist nicht entflammbar und besitzt hydrophile Eigenschaften, seine Reaktivität verändert sich bei der Lagerung nicht. Jedoch ist die Anwendung dieses Gasbildners zur Bereitung von Zellenbeton nur bei höheren Temperaturen möglich, da im Ergebnis des hohen Anteils an Fettsäuren eine Wechselwirkung letzterer mit den Hydratationsprodukten des Zementes zu beobachten ist, wobei durch die Bildung von Teilchen, die am Aluminiumpulver adsorbiert werden, dieses passiviert wird. Im Zusammenhang damit entsteht nicht die angestrebte feinporige Struktur des Materials, sondern es treten stattdessen bedeutende Entmischungserscheinungen im Frischbeton und eine Verschlechterung der mechanischen Eigenschaften des fertigen Zellenbetons ein.

Verfahren auf der Grundlage der bekannten zur Luftporenbildung fähigen organischen Zusätze und der Gasporenbildner ermöglichen es nicht, Verformungen der Frischbetonmasse und das Zusammenfließen von Poren zu vermeiden sowie das Absetzen von Bestandteilen der Zellenbetonmischung zu beseitigen.

Es ist daher Aufgabe dieser Erfindung, einen Gasporenbildner für die Herstellung von Zellenbeton zu schaffen, der sich auch nach längerer Lagerung durch eine hohe Reaktionsaktivität und Hydrophilie auszeichnet und bei seiner Anvendung in einem entsprechenden Verfahren eine feinporige Struktur des Frischbetons bei einer gleichmäßigen Porenverteilung und einem überwiegenden Anteil geschlossener Poren im gesamten Volumen der Mischung bewirkt. Bei dem aufgabengemäßen Verfahren soll die Vorwarmung des Anmachwassers vermeidbar sein, ohne daß Qualitätseinbußen für den verfahrensgemäß hergestellten Beton eintreten.

Das angegebene Ziel kann durch den Einsatz eines Gasporenbildners erreicht werden, der über die Fähigkeiten sowohl zur Luftporenbildung als auch zur Gasbildung verfügt und aus Aluminiumpulver und Ethanolaminester synthetischer Fettsäuren mit der allgemeinen Pormel

H₃₋ₚN(CH₂CH₂OCOR)ₚ

besteht, wobei R ein Alkylradikal mit einer Kettenlänge von 10 bis 16 Kohlenstoffatomen (allgemeine Formel: -CₙH₂ₙ₊₁, n=10-16) ist und der Index p im Bereich von p = 1 bis 3 variieren kann.

Der erfindungsgemäße Porenbildner erweist sich in Seiner Zusammensetzung mit einem Verhältnis der Komponenten (in Masseprozent) von
- Aluminiumpulver - 70-94
- organischer Zusatz - 6-30
durch den organischen Zusatz als strukturierende oberflächenaktive Substanz, die zur Luftporenbildung und durch die optimierte, möglichst monodisperse Korngrößenverteilung des Aluminiumpulvers im Bereich von 10 bis 80 µm zur Verzögerung des Einsetzens der aktiven Gasentwicklung in der Frischbetonmischung während der Anfangszeit der Mischungsbereitung und einem rechtzeitigen Abbruch der Gasentwicklung geeignet ist. So bewirkt der Porenbildner die Entstehung einer feinen, homogenen und vorwiegend geschlossenen Porosität des Frischbetons, ohne daß in den daraus hergestellten Erzeugnissen Risse und Entmischungszonen auftreten.

Weiterhin bewirkt die gleichzeitige Bildung von Poren sowohl durch Gasausscheidung als auch durch Lufteintrag die Entstehung von festen Wasserstoffzellen, die in eine Wasserhülle eingeschlossen sind, auf deren Oberfläche sich dann der vorgeschlagene organische Zusatz befindet. Die so entstandenen Zellen können dem hohen Innendruck standhalten, der durch die Entwicklung überschüssigen Gases und die natürlichen Vergrößerung des Wasserstoffvolumens mit der Erhöhung der Temperatur der Mischung während der Strukturbildung entsteht. Die entstandenen Wasserstoffzellen fließen nur schwer miteinander zusammen, was auch zur Bildung einer feinen homogenen Porosität beiträgt. Die kleinen Zellen können ebenfalls einem hohen Außendruck standhalten, was ein Absetzen größerer Teilchen der Mischung behindert.

Der erfindungsgemäße Porenbildner in Form einer Paste ist explosionssicher, hydrophil und garantiert eine langzeitlich stabile Reaktionsfähigkeit.

Das erfindungsgemäßen Verfahren ermöglicht es, die Qualität des Zellenbetons zu erhöhen und gleichzeitig den Verbrauch an Aluminiumpuder zu senken. Der Einsatz von vorgewärmtem Anmachwasser ist nicht erforderlich. Durch die anfänglich verzögerte Gasentwicklung in der Frischbetonmischung und die parallele Bildung von Gas- und Luftporen gestattet die Anwendung des erfindungsgemäßen Verfahrens eine Senkung des verbrauchs an Gasporenbildner um etwa 20-30 Prozent gegenaber den herkömmlichen Verfahren.

Beim Einsatz des erfindungsgemäßen Verfahrens ist es gelungen, eine aus der Gas- und Schaumbetonbildung kombinierte Methode zum Aufbau der Porositat des Zellenbetons zu erhalten. Wie bereits erwähnt, bildet sich die Porositat teilweise während des intensiven Vermischens des Frischbetons durch Luftporenbildung und teilweise durch Gasbildung. Es entsteht eine Vielzahl kleiner, die Masse stabilisierender Zeilen. Der Frischbeton ist durch die Zugabe des Porenbildners weich und erfordert nur einen verhältnismäßig geringen Energieaufwand zum Durchmischen. Der zeitliche Verlauf der Porenbildung ist auf den des Erstarrungsvorganges der Frischbetonmischung abgestimmt.

Die Erfindung soll an einem Ausführungsbeispiel näher erläutert werden, ohne daß sie sich darauf beschränkt.

Aluminiumpulver wurde in einen Zweiwalzenmischer mit einem Arbeitsvolumen von 0,4 dm³ und einer Drehzahl der Vorderwalze von 29,5 min⁻¹ und einer Drehzahl der Hinterwalze von 17,5 min⁻¹ gegeben. In den Mischer wurden verschiedene der in Anspruch 1 genannten Ester gegeben. Für die Dauer von 0,5 Stunden wurde eine intensive Durchmischung vorgenommen. In allen Fällen war die Menge des erhaltenen Porenbildners die gleiche und betrug 100 g.

Die Eigenschaften dreier erfindungsgemäßer Porenbildner und ihre Zusammensetzung sind in der Tabelle 1 im Vergleich zu einem Porenbildner gemäß dem Stand der Technik aufgeführt. Im Hinblick auf die Hydrophilie. die Stabilität der Mischungen und ihren Blähgrad nach 10 Minuten gehen daraus deutlich die Vorteile der Erfindung (Zusammensetzungen 1 bis 3) gegenüber dem Stand der Technik (Zusammensetzung 4) hervor.

Der Porenbildner mit der Zusammensetzung 1 wurde weiterhin bei der Bereitung einer Zellenbetonmischung verwendet, die mit einer analogen Mischung verglichen wurde, für die jedoch der Vergleichszusatz 4 als Porenbildner eingesetzt wurde. Die entsprechenden Zusammensetzungen der Mischungen sind in Tabelle 2 enthalten. Der Einsatz oberflächenaktiver Stoffe in den Porenbildnern gestattete dabei die Wahl eines nicht zu hohen w/z-Wertes bei trotzdem guter Durchmischbarkeit der Frischbetonmassen.

**Tabelle 1:**

| Lfd. Nr. | Organischer Zusatz | Zusammensetzung des Porenbildners | | Hydrophilie | Blähgrad der Mischung nach 10 min in % |
|---|---|---|---|---|---|
| | | Alupulver | org. Zusatz | | |
| 1 | R=-CₙH₂ₙ₊₁, p=1, n=10 bis 13 | 70 | 30 | stabile Dispersion in kaltem Wasser | 264 |
| 2 | R=-CₙH₂ₙ₊₁, p=2, n=10 bis 16 | 80 | 20 | -"- | 278 |
| 3 | R=-CₙH₂ₙ₊₁, p=3, n=12 bis 16 | 94 | 6 | -"- | 270 |
| 4 | Triethanolamin und Fettsäuren | 75 | 25 | instabile Dispersion, Verdichtung der oberen Schicht | 232 |

**Tabelle 2:**

| Mischungsbestandteil | Zusammensetzung | |
|---|---|---|
| | erfindungsgemäß | nach Stand der Technik |
| Zement der Marke 400 (in g) | 90 | 90 |
| Kalk mit einer Aktivität von 70% (in g) | 150 | 150 |
| gemahlener Sand (in g) | 300 | 300 |
| Porenbildner (in g/l) | 0,41 | 0,50 |
| w/z-Wert | 0,45 | 0,45 |

Die Untersuchungen wurden entsprechend der Kontrollmethodik für Zellenbetonnischungen durchgeführt, wobei die in Tabelle 3 aufgeführten Parameter kontrolliert und die angegebenen Meßwerte bestimmt wurden.

**Tabelle 3:**

| Parameter | erfindungsgemäße Zusammensetzung | Zusammensetzung nach Stand der Technik |
|---|---|---|
| Blähhöhe in cm | 65 | 61 |
| Rohdichte des Betons in kg/m³ | 630 | 650 |
| Festigkeit in MPa (Druckfestigkeit) | 6,0 | 5,0 |
| Absetzung der Mischung in cm | 0 | 4,0 |

| Wasserstoffentwicklung in ml ¹⁾ | | |
|---|---|---|
| - nach 2 min | 1 | 9 |
| - nach 16 min | 70 | 55 |
| Materialstruktur | monodispers, geschlossene Porosität | polydispers mit zerstörten Wänden zwischen den Zellen |

| | | |
|---|---|---|
| ¹ Freisetzung von Wasserstoff bezogen auf 0,1 g Gasbildner bei einer Temperatur von 20 °C in gesättigtem Kalkmörtel | | |

Der erfindungsgemäße Porenbildner zeigte gleichzeitig gute lufteintragende und gasfreisetzende Eigenschaften, was es möglich machte, das angestrebte Ziel zu erreichen: Die Einsatzmenge konnte gegenüber dem Stand der Technik verringert werden. Die Wasserstoffentwicklung in der Mischung setzte anforderungsgemäß verzogert ein und war damit auf die Konsistenz der Mischung abgestimmt. Entmischungserscheinungen traten nicht auf. Die Blähhöhe war größer als bei der Frischbetonmischung mit dem Porenbildner entsprechend dem Stand der Technik, was zu einer verringerten Rohdichte des Betons führte. Dennoch zeigten Probekörper aus dem erfindungsgemäß hergestellten Zellenbeton aufgrund einer durch eine homogene, monodisperse und vorwiegend geschlossene Porositat gekennzeichneten Materialstruktur eine höhere Druckfestigkeit als die Vergleichsprobekörper.

## Patentansprüche

1. Gasporenbildner für die Porenbildung von Frischbeton, der Aluminiumpulver und einen organischen Zusatz enthält,
**dadurch gekennzeichnet,**
daß als organischer Zusatz Ethanolaminester synthetischer Fettsäuren mit der allgemeinen Formel
H₃₋ₚN(CH₂CH₂OCOR)ₚ
verwendet werden, wobei R ein Alkylradikal der allgemeinen Formel -CₙH₂ₙ₊₁ mit n im Bereich von n = 10 bis 16 ist
und der Index p im Bereich von p = 1 bis 3 variieren kann.

2. Gasporenbildner nach Anspruch 1, dadurch gekennzeichnet, daß das Verhältnis der Komponenten (in Masseprozent)
- Aluminiumpulver - 70-94
- organischer Zusatz - 6-30
beträgt.

3. Gasporenbildner nach Anspruch 1 oder 2, dadurch gekennzeichnet, daß das Aluminiumpulver aus Teilchen einer engen Kornfraktion im Bereich von 10 bis 80 µm besteht.

4. Verfahren zur Herstellung einer Zellenbetonmischung, das die Vermischung von Binder, Mineralbestandteil und Wasser (Anmachwasser) bei Zugabe einer wäßrigen Suspension eines Porenbildners umfaßt, dadurch gekennzeichnet, daß als Porenbildner der organische Zusatz gemäß einem der Ansprüche 1 bis 3 in einer Menge von 0,1 bis 1,0 g/l Wasser verwendet wird.

5. Verfahren zur Herstellung einer Zellenbetonmischung nach Anspruch 4, dadurch gekennzeichnet, daß der Binder und der Mineralbestandteil mit einem Teil des Anmachwassers vorgemischt werden, wonach der Rest des Anmachwassers in Form der wäßrigen Suspension des Porenbildners zugegeben und untergemischt wird.

6. Verfahren zur Herstellung einer Zellenbetonmischung nach Anspruch 4 oder 5, dadurch gekennzeichnet, daß die Porenbildung sowohl durch Lufteintrag als auch durch aktive Gasentwicklung in der Betonmischung erfolgt, wobei die aktive Gasentwicklung nach einer Verzögerungszeit von 2 bis 10 Minuten einsetzt.

7. Verfahren zur Herstellung einer Zellenbetonmischung nach einem der Ansprüche 4 bis 6, dadurch gekennzeichnet, daß die Frischbetonmischung vor Beendigung der Gasentwicklung weiterverarbeitet wird.

8. Verfahren zur Herstellung einer Zellenbetonmischung nach einem der Ansprüche 4 bis 7, dadurch gekennzeichnet, daß die aktive Gasentwickung vor dem Erstarrungsbeginn der Mischung abgeschlossen ist.

## Claims

1. A gas pore-forming agent for pore formation in fresh concrete which contains aluminium powder and an organic additive, characterised in that ethanolamine esters of synthetic fatty acids of the general formula:
H₃₋ₚN(CH₂CH₂OCOR)ₚ
are used as the organic additive, wherein R is an alkyl radical of the general formula -CₙH₂ₙ₊₁ with n in the range of n = 10 to 16, and the index p can vary in the range of p = 1 to 3.

2. A gas pore-forming agent according to claim 1 characterised in that the ratio of the components (in percent by mass) is as follows:
- aluminium powder 70-94
- organic additive 6-30.

3. A gas pore-forming agent according to claim 1 or claim 2 characterised in that the aluminium powder comprises particles of a narrow grain fraction in the range of 10 to 80 µm.

4. A process for the production of a cellular concrete mix which includes mixing binder, mineral constituent and water (mixing water) with the addition of an aqueous suspension of a pore-forming agent characterised in that the pore-forming agent used is the organic additive according to one of claims 1 to 3 in an amount of 0.1 to 1.0 g/l of water.

5. A process for the production of a cellular concrete mix according to claim 4 characterised in that the binder and the mineral constituent are pre-mixed with a part of the mixing water, whereupon the remainder of the mixing water is added in the form of the aqueous suspension of the pore-forming agent and intermixed.

6. A process for the production of a cellular concrete mix according to claim 4 or claim 5 characterised in that pore formation is effected both by the introduction of air and also by active gas development in the concrete mix, wherein active gas development begins after a delay time of 2 to 10 minutes.

7. A process for the production of a cellular concrete mix according to one of claims 4 to 6 characterised in that the fresh concrete mix is subjected to further processing prior to termination of the gas development.

8. A process for the production of a cellular concrete mix according to one of claims 4 to 7 characterised in that active gas development is terminated before the mixture begins to harden.

## Revendications

1. Agent gonflant pour la formation de pores dans le béton frais, contenant de la poudre d'aluminium et un additif organique, caractérisé en ce que, comme additif organique, on emploie des esters d'éthanolamine d'acides gras synthétiques répondant à la formule générale :
H₃₋ₚN(CH₂CH₂OCOR)ₚ
dans laquelle :
R représente un radical alkyle de formule générale-CₙH₂ₙ₊₁, n étant compris entre n = 10 et n = 16, et
l'indice p pouvant varier dans le domaine p = 1 à 3.

2. Agent gonflant selon la revendication 1, caractérisé en ce que les proportions des composants (en pourcentage en masse) s'élèvent à :
- poudre d'aluminium = 70 à 94,
- additif organique = 6 à 30.

3. Agent gonflant selon la revendication 1 ou 2, caractérisé en ce que la poudre d'aluminium est constituée de particules d'une granulométrie étroite dans l'intervalle de 10 à 80 µm.

4. Procédé de préparation d'un mélange de béton cellulaire qui comprend le mélange de liant, de constituant minéral et d'eau (eau de gâchage) avec addition d'une suspension aqueuse d'un agent gonflant, caractérisé en ce que l'on emploie comme agent gonflant l'additif organique suivant l'une quelconque des revendications 1 à 3 en une quantité de 0,1 à 1,0 g/litre d'eau.

5. Procédé de préparation d'un mélange de béton cellulaire selon la revendication 4, caractérisé en ce que le liant et le constituant minéral sont mélangés avec une partie de l'eau de gâchage, le reste de cette eau de gâchage étant introduit et mélangé ensuite sous forme de suspension aqueuse de l'agent gonflant.

6. Procédé de préparation d'un mélange de béton cellulaire selon la revendication 4 ou 5, caractérisé en ce que la formation de pores résulte autant de l'introduction d'air que du dégagement actif de gaz dans le mélange de béton, le dégagement actif de gaz démarrant après un temps de latence de 2 à 10 minutes.

7. Procédé de préparation d'un mélange de béton cellulaire selon l'une quelconque des revendications 4 à 6, caractérisé en ce que l'on poursuit le mélange du béton frais avant l'achèvement du dégagement de gaz.

8. Procédé de préparation d'un mélange de béton cellulaire selon l'une quelconque des revendications 4 à 7, caractérisé en ce que le dégagement actif de gaz cesse avant le début de la solidification du mélange.
